# FASCICULE DE BREVET EUROPEEN

(11) **EP 0 868 936 B1**
(45) Date de publication et mention de la délivrance du brevet: **12.05.2004**
(21) Numéro de dépôt: 98400767.4
(22) Date de dépôt: 01.04.1998
(51) Int. Cl.: B01D 53/053, C01B 3/56

(54) **Procédé et installation de séparation d'un mélange gazeux par adsorption**
Verfahren und Vorrichtung zur Trennung einer Gasmischung durch Adsorption
Process and apparatus for separating a gas mixture by adsorption

(30) Priorité: 02.04.1997 FR 9704004
(43) Date de publication de la demande: 07.10.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Engler, Yves, 94300 Vincennes (FR); Monereau, Christian, 75011 Paris (FR)
(74) Mandataire: Le Moenner, Gabriel

(56) Documents cités:
- EP-A- 0 273 723
- EP-A- 0 350 373
- EP-A- 0 500 416
- EP-A- 0 513 747
- EP-A- 0 689 862
- EP-A- 0 705 636

## Description

La présente invention est relative à un procédé de séparation d'un mélange de gaz, notamment de production d'hydrogène, par adsorption modulée en pression (Pressure Swing Adsorption ou PSA) au moyen d'une installation à N adsorbeurs, où N>1, du type dans lequel on fait subir à chaque adsorbeur, de façon cyclique, une succession de phases d'adsorption, de décompression, de régénération et de remontée en pression, le cycle étant décalé d'un temps T/N d'un adsorbeur au suivant, où T désigne la durée du cycle.

Dans ce qui suit, les termes « entrée » et « sortie » désignent les extrémités d'entrée et de sortie d'un adsorbeur en phase d'adsorption ; l'expression « co-courant » désigne le sens de circulation du gaz dans l'adsorbeur pendant cette phase d'adsorption, et l'exptression « contre-courant » désigne le sens inverse de circulation.

Dans les cycles PSA appliqués à la purification de l'hydrogène, les équilibrages ont pour objectif de réduire les pertes de gaz à produire. Ainsi, afin de récupérer l'hydrogène qui se trouve près de la sortie de l'adsorbeur en fin de phase d'adsorption, la phase de régénération comporte au moins une étape de première décompression à co-courant par équilibrage de pressions avec un autre adsorbeur subissant une étape de première recompression à contre-courant. En considérant, pour simplifier, un cycle à un seul équilibrage, au cours des étapes de décompression qui suivent la première décompression par équilibrage, le gaz évacué de l'adsorbeur est généralement utilisé pour éluer un autre adsorbeur à la pression basse du cycle, puis évacué comme gaz résiduaire.

Le gaz encore contenu dans l'adsorbeur à la pression d'équilibrage peut donc être considéré comme perdu. Or, plus la pression est importante, plus le volume de gaz contenu dans un adsorbeur est important. Par conséquent, plus la pression d'équilibrage est faible, et plus les pertes en hydrogène sont faibles, c'est-à-dire plus le rendement d'extraction est élevé.

Une autre contrainte imposée aux installations PSA est de fournir un débit de production sensiblement constant. Pour cela, dans le cas où l'alimentation de l'installation s'effectue à débit constant (ce qui est généralement le cas pour les installations de production d'hydrogène), il a été proposé de prélever un débit constant de gaz de production pendant la phase d'adsorption, et d'alimenter à contre-courant avec ce gaz l'adsorbeur en étape de première recompression par équilibrage, simultanément avec le gaz de première recompression. Cependant, cette méthode conduit à relever la pression d'équilibrage, ce qui réduit le rendement comme expliqué plus haut.

On a aussi proposé d'intercaler une capacité auxiliaire dans la conduite de production, pour annuler sensiblement les variations du débit de production. Cette solution présente toutefois le grave inconvénient de nécessiter une capacité auxiliaire de très grande dimension si la pression d'utilisation désirée n'est que légèrement inférieure à la pression du gaz produit en sortie des adsorbeurs.

Le Document EP-A- 0 500 416, au nom de la Demanderesse, décrit différents procédés PSA de production d'oxygène dont certains mettent en oeuvre une capacité auxiliaire servant à l'élution ou contribuant à la repressurisation.

Le document EP-A-0 350 373, également au nom de la demanderesse, décrit également des cycles PSA pour la production d'oxygène mais ne mettant pas en oeuvre de réservoirs auxiliaires.

L'invention a pour but de permettre l'obtention d'un débit de production sensiblement constant et d'un très bon rendement par utilisation d'une capacité auxiliaire de faible volume.

A cet effet, l'invention a pour objet un procédé de séparation tel que défini dans la revendication 1.

Le procédé suivant l'invention peut comporter une ou plusieurs des caractéristiques suivantes :
- pendant l'étape (a1), la capacité auxiliaire n'est mise en communication qu'avec l'adsorbeur qui lui fournit du gaz de production ;
- pendant l'étape (c2), on réalise un équilibrage de pressions entre l'adsorbeur et la capacité auxiliaire ;
- le débit d'alimentation de l'installation en mélange de gaz est sensiblement constant.

Un exemple de mise en oeuvre de l'invention va maintenant être décrit en regard des dessins annexés sur lesquels :
- la Figure 1 représente schématiquement une installation pour la mise en oeuvre du procédé selon l'invention ; et
- la Figure 2 est un diagramme illustrant le cycle de fonctionnement de cette installation.

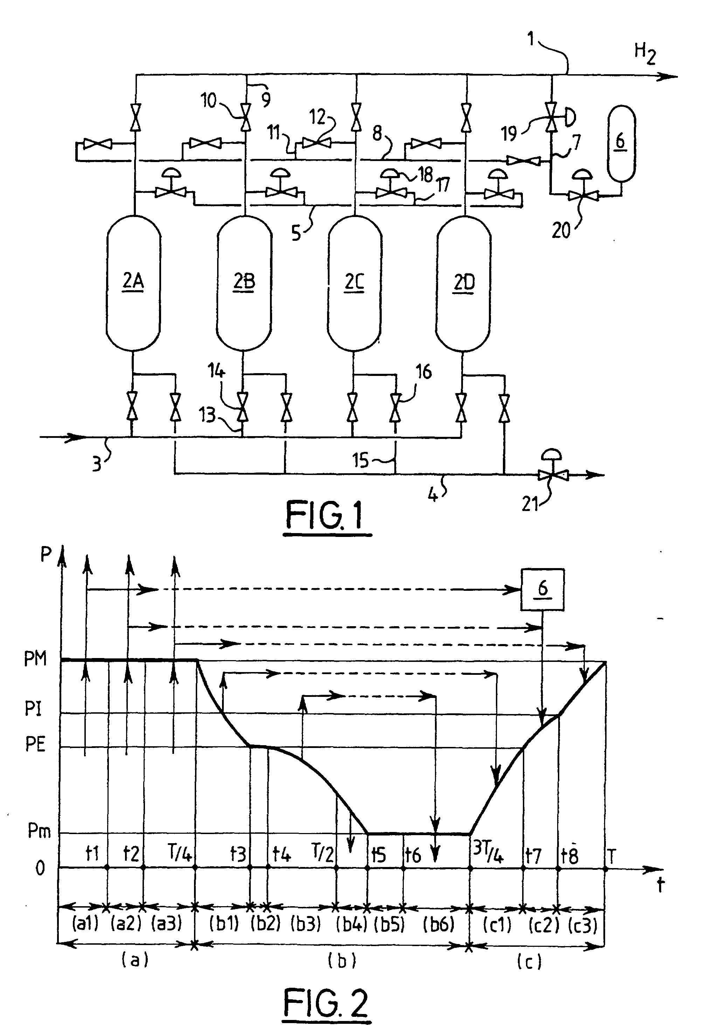

L'installation représentée sur la Figure 1 est destinée à produire sur une conduite de production 1 de l'hydrogène à débit sensiblement constant, sous une pression relativement élevée, typiquement de l'ordre de 25 à 30 bars. Cette production s'effectue par adsorption sélective à partir d'un mélange gazeux d'alimentation, au moyen de quatre adsorbeurs 2A à 2D. Le gaz d'alimentation est par exemple un gaz de synthèse de reformage à la vapeur et est acheminé à débit constant par une conduite d'alimentation 3.

L'installation comporte également une conduite 4 d'évacuation de gaz résiduai re, une conduite 5 de liaison entre les sorties des adsorbeurs, et une capacité auxiliaire 6 reliée en parallèle à la conduite 1 par une conduite 7. Sur cette dernière est piquée une conduite 8 permettant de relier la capacité 6 aux sorties des adsorbeurs.

La conduite 1 est reliée aux sorties des adsorbeurs par des embranchements 9 munis chacun d'une vanne d'arrêt 10. De même, la conduite 8 est reliée aux sorties des adsorbeurs par des embranchements 11 munis chacun d'une vanne d'arrêt 12.

La conduite 3 est reliée aux entrées des adsorbeurs par des embranchements 13 munis chacun d'une vanne d'arrêt 14. De même, la conduite 4 est reliée aux entrées des adsorbeurs par des embranchements 15 munis chacun d'une vanne d'arrêt 16. La conduite 5 est reliée aux sorties des adsorbeurs par des embranchements 17 munis chacun d'une vanne de régulation 18. La conduite 7 comporte deux vannes de régulation 19 et 20 entre lesquelles se pique la conduite 8. La conduite 4 comporte une vanne de régulation 21 en aval de ses embranchements 15.

L'installation comporte en outre divers moyens de commande et de contrôle, bien connus dans la technique, adaptés pour mettre en oeuvre le cycle d'absorption modulée en pression (Pressure Swing Adsorption ou PSA) illustré sur la Figure 2.

Sur cette Figure 2, où les temps t sont portés en abscisses et les pressions absolues P en ordonnées, les traits orientés par des flèches indiquent les mouvements et destinations des courants gazeux. Lorsque les flèches sont parallèles à l'axe des ordonnées, elles indiquent, en outre, le sens de circulation dans un adsorbeur : lorsqu'une flèche est dans le sens des ordonnées croissantes (vers le haut du diagramme), le sens du courant dans l'adsorbeur est à co-courant. Si la flèche dirigée vers le haut est située au-dessous du trait indiquant la pression dans l' adsorbeur, le courant pénètre dans l' adsorbeur par l'extrémité d'entrée de l'absorbeur; si la flèche, dirigée vers le haut, est située au-dessus du trait indiquant la pression, le courant sort de l' adsorbeur par l'extrémité de sortie de l'adsorbeur, les extrémités d'entrée et de sortie étant respectivement celles du gaz à traiter par l' adsorbeur considéré et du gaz s outi ré de ce même adsorbeur en phas e d'adsorption. Lorsqu'une flèche est dans le s ens des ordonnées décroissantes (vers le bas du diagramme), le sens du courant dans l'adsorbeur est à contre-courant. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase d'adsorption.

Dans l'exemple considéré, la pression haute PM du cycle est de l' ordre de 27 bars, et la pression basse Pm du cycle est voisine de 1,7 bars. Le temps de phase T/4 est 180 s.

Il est à noter que, pour la clarté du dessin, les proportions des pressions n'ont pas été respectées sur la Figure 2.

Le cycle sera décrit ci-dessous pour un adsorbeur, à savoir l'adsorbeur 2A. Les autres adsorbeurs suivent un cycle identique mais décalé dans le temps de T/4, T/2 et 3T/4 respectivement.

Le cycle est constitué des étapes successives suivantes :
(a) Phase d'adsorption (à peu près isobare):
   (a1) De t = 0 à t1, une première étape d'adsorption à co-courant, dans laquelle le mélange gazeux à traiter est introduit via la conduite 3 à l'entrée de l'adsorbeur au voisinage de la pression PM et circule à co-courant à travers celui-ci. L' hydrogène de production est soutiré à la sortie de l'adsorbeur et envoyé dans la conduite de production 1. Un débit prédéterminé D d'hydrogène est prélevé sur la conduite 1 et envoyé dans la capacité 6 via la conduite 7.
   (a2) De t1 à t2, une seconde étape d'adsorption à co-courant, qui ne diffère de la précédente que par le fait que le débit D d'hydrogène prélevé à la sortie de l'adsorbeur est envoyé à contre-courant dans un autre adsorbeur en étape de deuxième recompression (c2) décrite plus loin.
   (a3) De t2 à T/4, une troisième étape d'adsorption à co-courant, qui ne diffère de la précédente que par le fait que le débit d'hydrogène prélevé à la sortie de l'adsorbeur est envoyé à contre-courant dans un autre adsorbeur en étape de recompression finale (c3) décrite plus loin.
(b) Phase de régénération de l'adsorbant :
   (b1) De T/4 à t3, avec t3-T/4 = t1, une étape de première décompression à co-courant par équilibrage de pressions avec un autre adsorbeur en phase de première recompression à contre-courant (c1) décrite plus loin. Au cours de cette étape, la pression de l'adsorbeur tombe de PM à une valeur intermédiai re PE, dite pression d'équilibrage.
   (b2) De t3 à t4, un palier mort dans lequel l'adsorbeur est isolé. Cette étape, facultative, peut être nécessaire pour compenser des différences de durée entre certaines étapes du cycle.
   (b3) De t4 à T/2, une étape de deuxième décompression à co-courant, dans laquelle le gaz soutiré de la sortie de l'adsorbeur est envoyé à contre-courant dans un autre adsorbeur en phase d'élution (b6) décrite plus loin.
   (b4) De T/2 à t5, une étape de décompression finale à contre-courant jusqu' à la pression basse du cycle Pm, dans laquelle le gaz soutiré de l'entrée de l'adsorbeur est évacué via la conduite 4.
   (b5) De t5 à t6, un palier mort à la basse pression dans lequel l'adsorbeur est isolé. Les remarques faites ci-dessus au sujet de l'étape (b2) s'appliquent de nouveau.
   (b6) De t6 à 3T/4, avec 3T/4-t6 = T/2 - t4, une étape de purge/élution à contre-courant, à la basse pression Pm, au moyen de gaz provenant d'un autre adsorbeur en étape (b3). Le gaz issu de l'adsorbeur est évacué via la conduite 4.
(c) Phase de recompression :
   (c1) De 3T/4 à t7, avec t7-3T4 = t3-T/4, une étape de première recompression à contre-courant par équilibrage de pressions avec un autre adsorbeur en cours d' étape (b1) de première décompression à co-courant. A l'instant t7, la pression est remontée à la valeur intermédiaire PE.
   (c2) De t7 à t8, avec t8-t7 = t2-t1, une étape de recompression intermédiai re à contre-courant, au cours de laquelle l'adsorbeur, d'une part, reçoit le débit D d'hydrogène de production d'un autre adsorbeur en étape (a2), et d'autre part, est mis en communication avec la capacité 6 via la conduite 8. Cette étape se termine lorsque les pressions de l' adsorbeur et de la capacité sont égales à une même pression intermédiaire PI telle que PE<PI<PM.
      La pression PI est fonction de la durée de l'équilibrage entre adsorbeurs, des pressions d'adsorption PM et d'équilibrage PE, et de la durée de vidange de la capacité de repressurisation 6 dans l'adsorbeur à repressuriser. Cette pression PI est en pratique de l'ordre de quelques bars.
   (c3) De t8 à T, avec T-t8 = T/4 - t2, une étape de recompression finale à contre-courant au moyen du débit D d'hydrogène provenant d'un autre adsorbeur en étape (a3). A l'instant T, la pression est revenue sensiblement à la valeur PM, et le cycle recommence.

Grâce au montage de la capacité 6 en parallèle sur la conduite 1 et à la manière, décrite ci-dessus, dont cette capacité est utilisée, le débit de production est stable, et la pression de production reste sensiblement égale à la pression du gaz à traiter diminuée des pertes de charge de l'installation.

De plus, le rendement en hydrogène reste élevé, puisque la pression basse Pm est maintenue à un minimum, et le volume de la capacité 6 est considérablement plus faible que ce qu'il serait si cette capacité était montée dans la conduite 1.

Bien entendu, l' inventi on s'applique également à des cycles faisant intervenir un nombre d'adsorbeurs différent de quatre et/ou comportant plus d'une opération d'équilibrage de pressions entre adsorbeurs au cours de la décompression.

## Revendications

1. Procédé de séparation d'un mélange de gaz par adsorption modulée en pression au moyen d'une installation à N adsorbeurs (2A à 2D), où N>1, du type dans lequel on fait subir à chaque adsorbeur, de façon cyclique, la séquence de phases suivantes :
(a) une phase d' d'adsorption sensiblement isobare à la haute pression du cycle (PM),
(b) une phase de régénération de l'adsorbant comprenant au moins une étape (b1) de première décompression à co-courant par équilibrage de pressions avec un autre adsorbeur à une pression inférieure, et au moins une étape ultérieure (b3 ; b4) de dépressurisation jusqu'à la pression basse du cycle (Pm); et
(c) une phase de remontée en pression comprenant au moins une étape initiale (c1) de recompression par équilibrage de pressions avec un autre adsorbeur en cours d'étape (b1),
dans lequel un débit sensiblement constant de gaz de production est prélevé dans le flux de gaz produit pendant la phase (a) et est introduit dans un adsorbeur en cours de phase (c) et/ou dans une capacité auxiliaire (6) intervenant pendant cette phase (c),
et où
- pendant une. première étape (a1) de la phase (a), on envoie dans la capacité auxiliaire (6) le débit de gaz de production prélevé; et
- pendant une deuxième étape (a2) de la phase (a) qui suit l'étape (a1), on envoie à contre-courant dans un adsorbeur subissant une étape de recompression intermédiaire (c2) suivant l'étape initiale (c1), le gaz prélevé, cet adsorbeur étant simultanément mis en communication avec la capacité auxiliaire (6).

2. Procédé suivant la revendication 1, **caractérisé en ce que**, pendant l'étape (a1), la capacité auxiliaire (6) n'est mise en communication qu'avec l'adsorbeur qui lui fournit du gaz de production.

3. Procédé suivant la revendication 1 ou 2, **caractérisé en ce que**, pendant l'étape (c2) , on réalise un équilibrage de pressions entre l'adsorbeur et la capacité auxiliaire (6).

4. Procédé suivant l'une quelconque des revendications 1 à 3, **caractérisé en ce que** le débit d' alimentation de l'installation en mélange de gaz est sensiblement constant.

5. Procédé selon l'une des revendications 1 à 4, **caractérisé en ce que** la phase de remontée en pression comporte une étape (c3) de recompression finale jusqu'à la haute pression du cycle au moyen de gaz de production.

6. Procédé selon l'une des revendications 1 à 5, **caractérisé en ce que** l'étape (a1) de la phase (a) a une durée égale à celle de l'étape (b1) et de la phase (b).

7. Procédé selon l'une des revendications précédentes, **caractérisé en ce que** la pression basse de cycle (Pm) est supérieure à la pression atmosphérique.

8. Procédé selon l'une des revendications précédentes pour la production d'hydrogène.

## Claims

1. Process for the separation of a gas mixture by pressure swing adsorption by means of an installation having N adsorbers (2A to 2D), where N > 1, of the type where the sequence of the following phases is carried out cyclically in each adsorber:
(a) a substantially isobaric adsorption phase at the high cycle pressure (PM),
(b) a regeneration phase of the adsorbent, comprising at least one stage (b1) of a first countercurrent decompression by balancing the pressures with another adsorber at lower pressure and at least one subsequent stage (b3; b4) of decompression down to the low cycle pressure (Pm); and
(c) a pressure-raising phase, comprising at least one initial recompression stage (c1) by balancing the pressures with another adsorber in the course of stage (b1),
in which a substantially constant flow of product gas is taken off from the gas stream produced during phase (a) and is introduced into an adsorber in the course of phase (c) and/or into an auxiliary tank (6) involved in this phase (c), and/or
- during a first stage (a1) of phase (a), the flow of product gas taken off is passed into the auxiliary tank (6), and
- during a second stage (a2) of phase (a), which follows stage (a1), the gas taken off is passed countercurrently into an adsorber undergoing an intermediate recompression stage (c2) following the initial stage (c1), this adsorber being put simultaneously into communication with the auxiliary tank (6).

2. Process according to Claim 1, **characterized in that**, during stage (a1), the auxiliary tank (6) is brought into communication only with the adsorber which delivers product gas thereto.

3. Process according to Claim 1 or 2, **characterized in that** pressure balancing between the adsorber and the auxiliary tank (6) is effected during stage (c2).

4. Process according to any one of Claims 1 to 3, **characterized in that** the feed rate of gas mixture to the installation is substantially constant.

5. Process according to one of Claims 1 to 4, **characterized in that** the pressure-raising phase includes a final recompression stage (c3) up to the high cycle pressure by means of the product gas.

6. Process according to one of Claims 1 to 5, **characterized in that** stage (a1) of phase (a) is of the same duration as stage (b1) of phase (b).

7. Process according to one of the preceding claims, **characterized in that** the low cycle pressure (Pm) is higher than atmospheric pressure.

8. Process according to one of the preceding claims for the production of hydrogen.

## Patentansprüche

1. Verfahren zur Trennung eines Gasgemischs durch druckmodulierte Adsorption mittels einer Anlage mit N Adsorbern (2A bis 2D), wobei N>1 ist, der Art, bei der auf zyklische Weise jeder Adsorber der Abfolge folgender Phasen unterworfen wird:
(a) einer im Wesentlichen isobaren Adsorptionsphase bei dem hohen Druck des Zyklus (PM),
(b) einer Regenerationsphase des Sorptionsmittels mit zumindest einem ersten Entspannungabschnitt (b1) im Gleichstrom durch Druckausgleich mit einem anderen Adsorber bei niedrigerem Druck, und zumindest einem späteren Abschnitt (b3; b4) einer Druckabsenkung bis auf den tiefen Druck des Zyklus (Pm), und
(c) einer Druckwiederanstiegsphase mit zumindest einem anfänglichen Verdichtungsabschnitt (c1) durch Druckausgleich mit einem anderen Adsorber während des Abschnitts (b1),
bei dem eine im Wesentlichen konstante Produktionsgasmenge in dem produzierten Gasfluss während der Phase (a) entnommen wird und während dieser Phase (c) in einen Adsorber und/oder in einen während dieser Phase (c) zugeschalteten Hilfsspeicher (6) eingeführt wird,
und wobei
- während eines ersten Abschnitts (a1) der Phase (a) die entnommene Produktionsgasmenge zu dem Hilfsspeicher (6) geschickt wird, und
- während eines zweiten Abschnitts (a2) der Phase (a), der dem Abschnitt (a1) folgt, das entnommene Gas im Gegenstrom zu einem Adsorber geschickt wird, der einem Zwischenverdichtungsabschnitt (c2) unterliegt, der dem Anfangsabschnitt (c1) folgt, wobei dieser Adsorber gleichzeitig mit dem Hilfsspeicher (6) in Verbindung steht.

2. Verfahren nach Anspruch 1, **dadurch gekennzeichnet, dass** während des Abschnitts (a1), der Hilfsspeicher (6) nur mit dem Adsorber in Verbindung steht, der das Produktionsgas an ihn liefert.

3. Verfahren nach Anspruch 1 oder 2, **dadurch gekennzeichnet, dass** während des Abschnitts (c2), ein Druckausgleich zwischen dem Adsorber und dem Hilfsspeicher (6) durchgeführt wird.

4. Verfahren nach einem der Ansprüche 1 bis 3, **dadurch gekennzeichnet, dass** der Speisedurchsatz der Gasgemischanlage im Wesentlichen konstant ist.

5. Verfahren nach einem der Ansprüche 1 bis 4, **dadurch gekennzeichnet, dass** die Druckwiederanstiegsphase einen Abschnitt (c3) der abschließenden Wiederverdichtung bis auf den hohen Druck des Zyklus mittels Produktionsgas umfasst.

6. Verfahren nach einem der Ansprüche 1 bis 5, **dadurch gekennzeichnet, dass** der Abschnitt (a1) der Phase (a) eine Dauer gleich derjenigen des Abschnitts (b1) und der Phase (b) aufweist.

7. Verfahren nach einem der vorhergehenden Ansprüche, **dadurch gekennzeichnet, dass** der tiefe Druck des Zyklus (Pm) größer als der Atmosphärendruck ist.

8. Verfahren nach einem der vorhergehenden Ansprüche für die Produktion von Wasserstoff.
